(19) Europäisches Patentamt
European Patent Office
Office européen des brevets

(11) Veröffentlichungsnummer: **0 548 728 B1**

# (12) EUROPÄISCHE PATENTSCHRIFT

(45) Veröffentlichungstag der Patentschrift: **06.09.95**

(51) Int. Cl.[6]: **C09D 167/00**, C08G 63/688, C08G 63/692

(21) Anmeldenummer: **92121243.7**

(22) Anmeldetag: **14.12.92**

## (54) Wässrige Füllerzusammensetzung.

(30) Priorität: **21.12.91 DE 4142730**
**04.07.92 DE 4222012**

(43) Veröffentlichungstag der Anmeldung:
**30.06.93 Patentblatt 93/26**

(45) Bekanntmachung des Hinweises auf die Patenterteilung:
**06.09.95 Patentblatt 95/36**

(84) Benannte Vertragsstaaten:
**AT BE DE ES FR GB IT PT SE**

(56) Entgegenhaltungen:
**EP-A- 0 103 251**
**EP-A- 0 159 283**
**EP-A- 0 257 402**
**EP-A- 0 259 681**
**EP-A- 0 364 331**

(73) Patentinhaber: **HOECHST AKTIENGESELL-SCHAFT**

**D-65926 Frankfurt am Main (DE)**

(72) Erfinder: **Exner, Reiner, Dr.**
**Eichenplatz 22**
**W-6702 Bad Dürkheim (DE)**
Erfinder: **Schwab, Michael, Dr.**
**Jahnstrasse 33-35**
**W-6272 Niedernhausen-Oberjosbach (DE)**
Erfinder: **Kuhn, Ute**
**Lenzhahnerweg 40 c**
**W-6272 Niedernhausen (DE)**
Erfinder: **Zöller, Joachim, Dr.**
**Backhaushohl 51**
**W-6500 Mainz (DE)**

**EP 0 548 728 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Füllerzusammensetzungen werden vor allem in der Fahrzeugindustrie als Schicht zwischen Grundierung und Decklack aufgebracht und dienen einerseits zum Ausgleich von Unregelmäßigkeiten in der Grundierung, wodurch ein einwandfreies Aussehen des Decklackes gewährleistet werden soll, andererseits zur Verbesserung des Steinschlagschutzes der Gesamtlackierung. Durch ein plastisches Verhalten soll diese Schicht ein Durchschlagen der Streusplittpartikel, u.ä., wie sie von fremden Fahrzeugen oder auch vom eigenen Fahrzeug gegen die Lackierung geschleudert werden, verhindern. Auf der anderen Seite müssen die Füllerzusammensetzungen relativ harte Filme liefern, um die Naßschleifbarkeit der Lackierung zu ermöglichen, ohne daß sich dabei das Schleifpapier zusetzt.

In der EP-A 249 727 werden umweltfreundliche Füllerzusammensetzungen auf Wasserbasis (sog. "Wasser-" oder "Hydrofüller") beschrieben, die als Bindemittel eine Mischung aus carboxylfunktionellem, wasserverdünnbarem Polyesterharz, wasserlöslichem Epoxidharz-Phosphor(n)säureester und einem Melaminharz enthalten. Die Verarbeitbarkeit und das Eigenschaftsprofil dieser Füllerzusammensetzungen bzw. der daraus erhältlichen Filme sind insgesamt recht gut, jedoch befriedigen u.a. die Steinschlagfestigkeit, insbesondere bei tieferen Temperaturen (< 0 °C), und die Zwischenschichthaftung, insbesondere zum Decklack, nicht in allen Fällen.

Es wurde nun gefunden, daß wäßrige Füllerzusammensetzungen auf Basis von bestimmten, in Wasser dispergierbaren Polyesterharzen diese Nachteile nicht aufweisen.

Teilweise sind solche Polyester bereits aus EP 0 364 331 bekannt. Als Verwendungszweck für diese Polyester wird in diesem Dokument ganz allgemein die Herstellung von Beschichtungen, insbesondere Lackierungen, beschrieben. Die Verwendung speziell als Bindemittel für Füller ist dort nicht erwähnt. Füller müssen gleichzeitig eine hohe Zwischenschichthaftung und eine hohe Steinschlagfestigkeit aufweisen. Es ist überraschend und kann aus dem genannten Dokument nicht ohne weiteres hergeleitet werden, daß die dort beschriebenen Polyester dieses spezielle Profil von Merkmalen aufweisen und sich damit gut als Bindemittel in wäßrigen Füllerzusammensetzungen eignen.

Gegenstand der Erfindung ist daher eine wäßrige Füllerzusammensetzung enthaltend ein Polyesterharz, welches aus den Edukten (a), (b), (c), (d) und (e) oder deren esterbildenden Derivaten aufgebaut ist, wobei die Summe der Reaktanden 100 mol% entspricht und das Verhältnis der Summe der Hydroxyläquivalente (eq OH) zur Summe der Carboxyläqivalente in den Reaktanden zwischen 0,5 und 2,0 liegt, wobei

(a) mindestens eine Dicarbonsäure ist, die kein Sulfo- oder Phosphormonomer darstellt,

(b) 0 bis 15 mol% mindestens eines difunktionellen Sulfo- oder Phosphonomonomers ist, dessen funktionelle Gruppen Carboxyl- und/oder Hydroxylgruppen sind, mit mindestens einer Sulfonat- oder Phosphonatgruppe,

(c) mindestens eine difunktionelle Verbindung ist, die sich von einem Glykol mit zwei $-C(R)_2-OH$ Gruppen ableitet,

(d) bis zu 40 mol% einer höherfunktionellen Verbindung (Funktionalität > 2) ist, deren funktionelle Gruppen aus Hydroxyl- und/oder Carboxylgruppen bestehen, und

(e) 0 bis 20, vorzugsweise bis zu 10 mol% einer monofunktionellen Carbonsäure ist,

wobei die Reste R in (c) unabhängig voneinander Wasserstoff, $C_1$-$C_4$-Alkyl oder $C_6$-$C_{10}$-Aryl sein können, die Mengen an freien Hydroxylgruppen zwischen 30 und 350 Milliäquivalenten OH/100 g, bevorzugt zwischen 100 und 250 meq (OH)/100 g, liegen und der Gehalt an freien neutralisierten und/oder neutralisierbaren Säuregruppen, insbesondere Sulfon-, Phosphon-, Carbonsäuregruppen, zwischen 5 und 350 meq Säuregruppen/100 g, vorzugsweise zwischen 9 und 120 meq Säuregruppen/100 g, liegt. Die jeweiligen mol% Angaben beziehen sich auf die Gesamtmenge aller Monomeren.

Bevorzugte Alkylgruppen sind Methyl, Ethyl, n-Propyl, Isopropyl, n-Butyl, und Isobutyl, bevorzugte Arylgruppen sind Phenyl und Naphtyl. Die hier verwendeten Begriffe höher-, multi- oder polyfunktionell bezeichnen Verbindungen mit mehr als zwei reaktiven Hydroxyl- und/oder Carboxyl-Gruppen, der Begriff Glykol steht für eine Verbindung mit zwei, der Begriff Polyol für eine Verbindung mit mehr als zwei Hydroxylsubstituenten.

Die Dicarbonsäurekomponente (a) des Polyesters besteht aus aromatischen, cycloaliphatischen, Alkyl- oder Alkylendicarbonsäuren sowie Dimerfettsäuren oder aus Mischungen zweier oder mehrerer dieser Dicarbonsäuren. Beispiele für diese Dicarbonsäuren sind Oxal-, Malon-, Glutar-, Adipin-, Pimelin-, Azelain, Sebacin,- Fumar-, Malein-, und Itaconsäure, 1,3-Cyclopentandicarbonsäure, 1,2-Cyclohexandicarbonsäure, 1,3-Cyclohexandicarbonsäure, 1,4-Cyclohexandicarbonsäure, Phthal-, Terephthal-, Isophthalsäure, 2,5-Norbornandicarbonsäure, 1,4-Naphthalindicarbonsäure, Diphenyldicarbonsäure, 4,4'-Sulfonyldibenzoesäure und 2,5-Naphtalindicarbonsäure sowie deren Ester oder deren Anhydride.

Bevorzugte Dicarbonsäurekomponenten (a) sind Phthal-, Isophthal- und Terephthalsäure, Phthalsäureanhydrid, Adipin-, Bernsteinsäure, Bernsteinsäureanhydrid, Dimerfettsäuren, Sebazin- und Azelainsäure, 1,3-Cyclohexandicarbonsäure und Glutarsäure sowie deren Ester.

Bei Komponente (b) des zu beschreibenden Polyesters handelt es sich um eine difunktionelle, aromatische, cycloaliphatische oder aliphatische Verbindung mit reaktiven Carboxyl- und/oder Hydroxylgruppen, die desweiteren eine $-SO_3X$ - oder $-P(O)(OX)_2$- Gruppe aufweist, wobei X Wasserstoff oder ein Metallion wie z.B. $Na^+$, $Li^+$, $K^+$, $Mg^{2+}$, $Ca^{2+}$, $Cu^{2+}$ oder ein stickstoffhaltiges Kation von aliphatischen, cycloaliphatischen oder aromatischen Verbindungen wie z.B. Ammoniak, Triethylamin, Dimethylethanolamin, Diethanolamin, Triethanolamin, Pyridin, abgeleitet sein kann.

Die $-SO_3X$- oder $-P(O)(OX)_2$- Gruppen können an einen aromatischen Kern wie z. B. Phenyl, Naphthyl, Diphenyl, Methylendiphenyl oder Anthracenyl gebunden sein.

Beispiele für die Komponente (b) sind Sulfoisophthalsäure, Sulfoterephthalsäure, Sulfophthalsäure, Sulfosalicylsäure, Sulfobernsteinsäure und deren Ester. Besonders bevorzugt sind die Na-Salze von Sulfoisophthalsäure, Sulfoisophthalsäuredimethylester, Sulfosalicylsäure und Sulfobernsteinsäure.

Der Anteil der Komponente (b) beträgt 0 bis 15 mol%, besonders bevorzugt 1 bis 6 mol%, insbesondere 1 bis 4 mol%.

Die Glykolkomponente (c) kann aus niedermolekularen aliphatischen, cycloaliphatischen oder aromatischen Glykolen, aus Polyhydroxypolyethern oder aus Polycarbonatpolyolen bestehen. Als Beispiele für die niedermolekularen Glykole seien genannt: Ethylenglykol, 1,2-Propandiol, 1,3-Propandiol, 2,2-Dimethyl-1,3-propandiol, 1,3-Butandiol, 1,4-Butandiol, 1,5-Pentandiol, 1,6-Hexandiol, 2,2,4-Trimethyl-1,6-hexandiol, 1,2-Cyclohexandimethanol, 1,3-Cyclohexandimethanol, 1,4-Cyclohexandimethanol, Perhydro-bisphenol A, p-Xylylendiol, 2-Ethyl- und 2-Butylpropandiol.

Als Polyhydroxy-polyether kommen Verbindungen der Formel

$$H\text{-}[\text{-}O\text{-}(CHR)_n\text{-}]_m\,OH$$

infrage, in der

- R Wasserstoff oder ein niedriger Alkylrest, gegebenenfalls mit verschiedenen Substituenten, ist,
- n eine Zahl von 2 bis 6 und
- m eine Zahl von 10 bis 120 ist.

Beispiele sind Poly(oxytetramethylen)glykole, Poly(oxyethylen)glykole und Poly(oxypropylen)glykole. Die bevorzugten Polyhydroxy-polyether sind Poly(oxypropylen)glykole mit einem Molekulargewicht im Bereich von 400 bis 5000.

Die Polycarbonat-polyole bzw. Polycarbonatdiole sind Verbindungen, die der allgemeinen Formel

$$HO{-}R{-}(\,O{-}\overset{\overset{\displaystyle O}{\|}}{C}{-}O{-}R{-})_n{-}OH$$

entsprechen, worin R einen Alkylenrest bedeutet. Diese OH-funktionellen Polycarbonate lassen sich durch Umsetzung von Polyolen wie Propandiol-1,3, Butandiol-1,4, Hexandiol-1,6, Diethylenglykol, Triethylenglykol, 1,4-Bishydroxymethylcyclohexan,2,2-Bis(4-hydroxycyclohexyl)propan, Neopentylglykol, Trimethylolpropan, Pentaerythrit, mit Dicarbonaten, wie Dimethyl-, Diethyl- oder Diphenylcarbonat oder Phosgen herstellen. Gemische solcher Polyole können ebenfalls eingesetzt werden.

Als höherfunktionelle Komponente (d), die bevorzugt 3 bis 6 Hydroxyl- und/oder Carboxylgruppen enthält, werden Trimethylolpropan, Trimethylolethan, Glycerin, Ditrimethylolpropan, Pentaerythrit, Dipentaerythrit, Bishydroxyalkancarbonsäuren wie Dimethylolpropionsäure und Trimellitsäureanhydrid sowie Polyanhydride wie in DE 28 11 913 beschrieben oder Mischungen zweier oder mehrerer dieser Verbindungen bevorzugt, wobei der Anteil der höherfunktionellen Komponente (d) bevorzugt 5 bis 30 mol%, insbesondere 8 bis 20 mol%, beträgt.

Bei den monofunktionellen Carbonsäuren (e) handelt es sich vorwiegend um Fettsäuren wie die Caprinsäure, Laurinsäure, Stearinsäure und Palmitinsäure, es können jedoch auch verzweigte Carbonsäuren wie die Isovalerinsäure und Isooctansäure eingesetzt werden.

Das Zahlenmittel des Molekulargewichts des Polyesterharzes, experimentell mit Hilfe der Gelpermeationschromatographie bestimmt, kann zwischen 500 und 5000 liegen, bevorzugt wird 1000 bis 3500.

Um gegebenenfalls eine möglichst quantitative Cokondensation des Sulfo- oder Phosphonatomonomeren zu erreichen, kann es erforderlich sein, die Synthese der beschriebenen Polyester in einem mehrstufigen Verfahren durchzuführen. Es werden dazu in Gegenwart von Katalysatoren zunächst die gesamten hydroxyfunktionellen Komponenten mit den Sulfo- oder Phosphonatomonomeren und gegebenenfalls mit carbonsäurehaltigen Komponenten umgesetzt, so daß bei der Kondensation 95% der für einen quantitativen Umsatz berechneten Destillatmenge erhaltenen werden. Anschließend kommen gegebenfalls die aliphatischen Carbonsäurekomponenten zur Reaktion, wobei die Kondensation bis zum gewünschten Gehalt an Carbonsäureäquivalenten fortgesetzt wird.

Bei Verwendung einer Bishydroxyalkancarbonsäure wird zunächst ein OH-funktioneller Polyester dargestellt, der dann mit der Bishydroxyalkancarbonsäure und einer weiteren Dicarbonsäure zum gewünschten Polyester kondensiert wird.

Werden Polycarbonsäurenanhydride zum Einführen der anionischen Gruppen verwendet, so wird ein OH-funktioneller Polyester mit dem Anhydrid zum Halbester umgesetzt und anschließend bis zur gewünschten Säurezahl weiterkondensiert.

Die Reaktion findet bei Temperaturen zwischen 140 °C und 240 °C, bevorzugt zwischen 160 °C und 220 °C, statt. Zur Vermeidung von Glykolverlusten erfolgt die Destillation des Kondensates über eine Destillationskolonne. Als Katalysatoren kommen bevorzugt Organometallverbindungen, insbesondere zink-, zinn- oder titanhaltige Verbindungen wie z. B. Zinkacetat, Dibutylzinnoxid oder Tetrabutyltitanat in Betracht. Die Menge an Katalysator beträgt bevorzugt 0.1 bis 1.5 Gew.-% der Menge des Gesamtansatzes.

Die Säuregruppen können bereits in neutralisierter Form über die Einzelkomponenten in den Polyester eingeführt werden, liegen freie Säuregruppen im Polyester vor, so kann gegebenenfalls deren Neutralisation mit wäßrigen Lösungen von Alkalihydroxiden oder mit Aminen, zum Beispiel mit Trimethylamin, Triethylamin, Dimethylanilin, Diethylanilin, Triphenylamin, Dimethylethanolamin, Aminomethylpropanol, Dimethylisopropanolamin oder mit Ammoniak durchgeführt werden.

Die Isolierung des Polyesters kann in Substanz erfolgen, bevorzugt wird jedoch die Herstellung einer 50 bis 95 %igen Lösung in einem wassermischbaren, organischen Lösemittel. In Frage kommen hierfür bevorzugt sauerstoffhaltige Lösemittel wie Alkohole, Ketone, Ester, Ether, z.B: Ethanol, n-Propanol, iso-Propanol, iso-Butanol, Butylacetat und Butylglykol, oder stickstoffhaltige Lösemittel wie z.B. N-Methylpyrrolidon. Die Viskosität dieser Lösungen liegt bei 60 °C bevorzugt zwischen 0,5 und 40 Pa.sec.

Diese Lösung wird dann zur Herstellung der Polyesterdispersion herangezogen, so daß Anteile von 15 bis 65 Gew.-% Polyester, von 0 bis 30 Gew.-% organischer Lösemittel und von 35 bis 85 Gew.-% Wasser in der Dispersionen vorliegen. Der resultierende pH-Wert beträgt 2 bis 8,5, bevorzugt 4 bis 8.

**Beispiele**:

Die Durchführung der Polyestersynthese erfolgt in einem 4l-Vierhalskolben mit aufgesetzter Füllkörperkolonne (Kolonnenrohr: 30 mm Durchmesser, 2000 mm Länge; Füllkörper: Glasringe mit 6 mm Durchmesser und 6 mm Länge) und absteigender Destillationsbrücke, mit Temperaturfühlung des Reaktionsgutes unter Schutzgasatmosphäre (Schutzgaszufuhr, Stickstoff). Werden niedrigsiedende Alkohole, insbesondere Methanol als Kondensat abdestilliert, ist die Vorlage mit einem Eisbad zu kühlen. Die im folgenden verwendeten Kürzel sind auf Seite 18 erläutert.

Polyester 1

Einwaagen gemäß Tabelle 1

Stufe 1: Hydroxylgruppenhaltige Reaktanden aufschmelzen, 5-SIPDME-Na und 3.0 g Zn(Ac)2 zugeben, aufheizen, so daß die Kopftemperatur 65 °C nicht überschreitet, und bei etwa 190 °C kondensieren, bis 22 g Destillat erhalten worden sind.

Stufe 2: Abkühlen auf 140 °C, ADPS zugeben und aufheizen, so daß die Kopftemperatur 100 °C nicht überschreitet, bei Temperaturen bis ca 190 °C kondensieren, bis 130 g Destillat erhalten worden sind.

Stufe 3: Abkühlen auf 130 °C, TPS und 1,3 g Dibutylzinnoxid zugeben, aufheizen, so daß die Kopftemperatur 100 °C nicht überschreitet, bei 180 °C bis 195 °C kondensieren bis ein Gehalt an freien Carboxylgruppen von 35 meq (COOH)/100 g erreicht ist, und anschließend weiter kondensieren bei 200 °C und 150 mbar bis zu einem Wert von 9 meq (COOH)/100 g.

Polyester 2

Einwaagen gemäß Tabelle 1

Stufe 1: Hydroxylgruppenhaltige Reaktanden aufschmelzen, 5-SIPDME-Na und 3,0g Zinkacetat zugeben, aufheizen, so daß die Kopftemperatur 65 °C nicht überschreitet, bei 170 °C bis 185 °C kondensieren, bis 23 g Destillat erhalten sind.

Stufe 2: Abkühlen auf 140 °C, TPS und 1,5 g Dibutylzinnoxid zugeben, aufheizen, so daß die Kopftemperatur 100 °C nicht überschreitet, und bei Temperaturen bis zu 210 °C kondensieren, bis ein Gehalt an freien Carboxylgruppen von 45 meq (COOH)/100 g erreicht ist.

Stufe 3: Abkühlen auf 130 °C, ADPS zugeben, aufheizen, so daß die Kopftemperatur 100 °C nicht überschreitet, bei 160 bis 190 °C bis zu einem Wert von 35 meq (COOH)/100 g kondensieren, anschließend weiter kondensieren bei 200 °C und 100 mbar, bis der Wert von 7 meq (COOH)/100 g erreicht ist.

Polyester 3

Einwaagen gemäß Tabelle 1

Stufe 1: Hydroxylgruppenhaltige Reaktanden aufschmelzen, 5-SIP-Na, TPS und 1,5 g Dibutylzinnoxid zugeben, aufheizen, so daß die Kopftemperatur 100 °C nicht überschreitet, bei 185 °C bis 195 °C kondensieren, bis 135 g Destillat erhalten sind.

Stufe 2: Abkühlen auf 120 °C, IPS und 1,0 g Dibutylzinnoxid zugeben, aufheizen, so daß die Kopftemperatur 100 °C nicht überschreitet, bei Temperaturen bis zu 190 °C kondensieren, bis ein Gehalt an freien Carboxylgruppen von 45 meq (COOH)/100 g erreicht ist

Stufe 3: Abkühlen auf 140 °C, ADPS zugeben, aufheizen, so daß die Kopftemperatur 100 °C nicht überschreitet, bei 160 bis 175 °C bis zu einem Gehalt von 55 meq (COOH)/100 g kondensieren, anschließend bei 180 °C bis 200 °C und 100 mbar weiter kondensieren bis der Wert von 12 meq (COOH)/100 g erreicht ist.

Polyester 4

Einwaagen gemäß Tabelle 1

Stufe 1: Neopentylglykol und Trimethylolpropan aufschmelzen, TPS, IPS und 2,5 g Dibutylzinnoxid zugeben, aufheizen, so daß die Kopftemperatur 100 °C nicht überschreitet, bei 190 °C bis 200 °C kondensieren, bis ein Gehalt an Säuregruppen von 10 meq (COOH)/100 g erreicht ist.

Stufe 2: Abkühlen auf 140 °C, ADPS und DMPS zugeben, aufheizen, so daß die Kopftemperatur 100 °C nicht überschreitet, bei Temperaturen bis zu 200 °C kondensieren, bis ein Wert von 55 meq (COOH)/100 g erreicht ist. Danach auf 80 °C abkühlen und 130.0 g Dimethylethanolamin zugeben.

Polyester 5

Einwaagen gemäß Tabelle 1

Stufe 1: Neopentylglykol und Trimethylolpropan aufschmelzen, TPS, IPS, LS und 2,5 g Dibutylzinnoxid zugeben, aufheizen, so daß die Kopftemperatur 100 °C nicht überschreitet, bei 190 °C bis 200 °C kondensieren, bis ein Gehalt an Säuregruppen von 10 meq (COOH)/100 g erreicht ist.

Stufe 2: Abkühlen auf 140 °C, ADPS und DMPS zugeben, aufheizen, so daß die Kopftemperatur 100 °C nicht überschreitet, bei Temperaturen bis zu 200 °C kondensieren, bis ein Wert von 55 meq (COOH)/100 g erreicht ist. Danach auf 80 °C abkühlen und 130.0 g Dimethylethanolamin zugeben. 300 g Butylglykol und 70 g Dimethylethanolamin zugeben.

Polyester 6

Einwaagen gemäß Tabelle 1

Stufe 1: Neopentylglykol und Trimethylolpropan aufschmelzen, TPS, IPS und 2,5 g Dibutylzinnoxid zugeben, aufheizen, so daß die Kopftemperatur 100 °C nicht überschreitet, bei 190 °C bis 200 °C kondensieren, bis ein Gehalt an Säuregruppen von 10 meq (COOH)/100 g erreicht ist.

Stufe 2: Abkühlen auf 140 °C, TMSA zugeben und bei der Temperatur rühren bis ein Wert von 55 meq (COOH)/100 g erreicht ist. Danach auf 80 °C abkühlen und 523 g Butylglykol und 192,3 g Dimethylethanolamin zugeben.

Tabelle 1: Polyester

| | | Komponenten | | | | | | | | | | |
|---|---|---|---|---|---|---|---|---|---|---|---|---|
| | | IPS | TPS | ADPS | 5-SIP-Na | 5-SIP-DME-Na | DMPS | NPG | HD | TMP | LS | TMSA |
| Polyester 1 | Einwaage (g) | / | 850 | 890 | / | 135 | / | 1090 | / | 306 | / | / |
| | mol | / | 5.12 | 6.09 | / | 0.46 | / | 10.46 | / | 2.28 | / | / |
| | mol% | / | 21,0 | 24,9 | / | 1,9 | / | 42,8 | / | 9,3 | / | / |
| Polyester 2 | Einwaage (g) | 955 | / | 800 | 110 | / | / | 1075 | / | 320 | / | / |
| | mol | 5.75 | / | 5.47 | 0.41 | / | / | 10.32 | / | 2.38 | / | / |
| | mol% | 23,6 | / | 22,5 | 1,7 | / | / | 42,4 | / | 9,8 | / | / |
| Polyester 3 | Einwaage (g) | 450 | 505 | 800 | 118 | / | / | 800 | 310 | 320 | / | / |
| | mol | 2.71 | 3.04 | 5.47 | 0.44 | / | / | 7.68 | 2.62 | 2.38 | / | / |
| | mol% | 11,1 | 12,5 | 22,5 | 1,8 | / | / | 31,5 | 10,8 | 9,8 | / | / |
| Polyester 4 | Einwaage (g) | 520 | 720 | 800 | / | / | 300 | 1040 | / | 400 | / | / |
| | mol | 3.13 | 4.33 | 5.47 | / | / | 2.24 | 9.98 | / | 2.98 | / | / |
| | mol% | 11,1 | 15,4 | 19,4 | / | / | 8,0 | 35,5 | / | 10,6 | / | / |

Fortsetzung:
Tabelle 1: Polyester

| | | Komponenten | | | | | | | | | | |
|---|---|---|---|---|---|---|---|---|---|---|---|---|
| | | IPS | TPS | ADPS | 5-SIP-Na | 5-SIP-DME-Na | DMPS | NPG | HD | TMP | LS | TMSA |
| Polyester 5 | Einwaage (g) | 260 | 300 | 450 | / | / | 150 | 520 | / | 220 | 100 | / |
| | mol | 1,56 | 1,81 | 3,08 | / | / | 1,12 | 4,99 | / | 1,64 | 0,5 | / |
| | mol% | 10,6 | 12,3 | 20,9 | / | / | 7,6 | 33,9 | / | 11,2 | 3,4 | / |
| Polyester 6 | Einwaage (g) | 980 | / | 619 | / | / | / | 657 | / | 375 | / | 332 |
| | mol | 6,64 | / | 4,24 | / | / | / | 6,32 | / | 2,8 | / | 1,73 |
| | mol% | 30,6 | / | 19,5 | / | / | / | 29,1 | / | 12,9 | / | 7,9 |

| | Verhältnis OH/COOH bzgl. Ausgangskomp. | meq (COOH)/100 g | meq (OH)/100 g | meq ($SO_3Na$)/100 g |
|---|---|---|---|---|
| Polyester 1: | 1,191 | 9 | 145 | 16 |
| Polyester 2: | 1,195 | 7 | 140 | 14 |
| Polyester 3: | 1,190 | 12 | 146 | 15 |
| Polyester 4: | 1,188 | 55 | 203 | / |
| Polyester 5: | 1,181 | 56 | 156 | / |
| Polyester 6: | 0,78 | 104 | 117 | / |

Kürzel:

PSA = Phthalsäureanhydrid
IPS = Isophthalsäure

TPS = Terephthalsäure
ADPS = Adipinsäure
5-SIP-Na = 5-Sulfoisophthalsäure-Na-Salz
5-SIPDME-Na = 5-Sulfoisophthalsäuredimethylester-Na-Salz
HD = 1,6-Hexandiol
NPG = Neopentylglykol
TMP = Trimethylolpropan
DMPS = Dihydroxypropionsäure
TMSA = Trimellithsäureanhydrid
LS = Laurinsäure

Die Polyesterharze werden bei 90 - 100 °C mit Butylglykol zu einer 85%igen Lösung verdünnt. Die entsprechenden wäßrigen Polyesterdispersionen erhält man durch weiteres Verdünnen (Dispergieren) der auf 70 bis 110 °C temperierten, im organischen Lösemittel gelösten Polyester mit auf 60 - 90 °C temperiertem, entmineralisiertem Wasser unter erhöhter Schergeschwindigkeit (Rührerumlaufgeschwindigkeit von 3 bis 6 m/sec).

Nach diesem Verfahren erhält man die Dispersionen unter Beispiel 1-6 mit den folgenden Kenndaten:

Beispiel 1: 45% Polyester 1, 8% Butylglykol, 47% Wasser, pH = 4,90, n = 380 mPas
Beispiel 2: 37,5% Polyester 2, 6,5% Butylglykol, 56% Wasser, pH = 5,15, n = 905 mPas
Beispiel 3: 37,5% Polyester 3, 6,5% Butylglykol, 56% Wasser, pH = 4,00, n = 800 mPas
Beispiel 4: 35,8 % Polyester 4, 6,2 % Butylglykol, 58 % Wasser, pH = 7,4, n = 890 mPas
Beispiel 5: 41 % Polyester 5, 6 % Butylglykol 53 % Wasser, pH = 7, 3, n = 2671 mPas
Beispiel 6: 41 % Polyester 6, 6,5 % Butylglykol 52,5 % Wasser, pH = 6, 4, n = 65 mPas

Die Lagerstabilität der Dispersionen beträgt bei 25 °C mehr als 4 Monate.

Die beanspruchte wäßrige Füllerzusammensetzung enthält, bezogen auf die gesamte Formulierung, im allgemeinen 5 bis 40, vorzugsweise 15 bis 30 Gew.-% an Polyesterharz.

Neben dem Polyesterharz kann die wäßrige Füllerzusammensetzung als Bindemittel noch bis zu 60, vorzugsweise bis zu 30 Gew.-%, bezogen auf das Polyesterharz, anderer oligomerer oder polymerer Materialien enthalten, wie vernetzungsfähige, wasserlösliche oder wasserdispergierbare Phenolharze, Polyurethanharze, Epoxidharze oder Acrylharze etc., wie beispielsweise in der EP-Offenlegungsschrift 89 497 beschrieben.

Als Vernetzungsmittel sind die für Polyolharze üblichen Härter geeignet, sofern sie wasserverträglich sind. Genannt seien hier beispielsweise wasserverträgliche (wasserlösliche oder wasserdispergierbare) Aminoharze, insbesondere handlesübliche veretherte Melamin-Formaldehyd-Kondensate wie Hexamethoxymethylmelamin, Phenolharze oder blockierte Polyisocyanate, wie beispielsweise in der DE-Offenlegungsschrift 36 44 372 beschrieben.

Die Menge an Vernetzungsmittel liegt üblicherweise bei 10 bis 35 Gew.-%, vorzugsweise 15 bis 25 Gew.-%, bezogen auf die Summe aus zu vernetzendem Bindemittel und Vernetzer.

Die wäßrige Füllerzusammensetzung gemäß der Erfindung, deren pH-Wert durch Zugabe von Aminen, wie z.B. Triethylamin, Dimethylethanolamin, Diethanolamin und Triethanolamin, so eingestellt werden kann, daß er im Bereich von 6,0 bis 10,0, bevorzugt von 6,8 bis 8,5 liegt, kann noch die üblichen Lackadditive, wie Pigmente und Füllstoffe, sowie Lackhilfsmittel, z.B. Antiabsetzmittel, Entschäumungs- und/oder Netzmittel, Verlaufmittel, Reaktiv-Verdünner, Weichmacher, Katalysatoren, Hilfslösemittel, Verdicker und dgl. enthalten. Zumindest ein Teil dieser Additive kann der Füllerzusammensetzung erst unmittelbar vor der Verarbeitung zugegeben werden. Die Auswahl und die Dosierung dieser Stoffe, die den Einzelkomponenten und/oder der Gesamtmischung zugegeben werden können, sind dem Fachmann bekannt.

Als Pigment sind beispielsweise Eisenoxide, Bleioxide, Bleisilikate, Titandioxid, Bariumsulfat, Zinkoxid, Zinksulfid, Phthalocyaninkomplexe etc. zu nennen, und als Füllstoffe Glimmer, Kaolin, Kreide, Quarzmehl, Asbestmehl, Schiefermehl, verschiedene Kieselsäuren, Silikate sowie Talkum inklusive von sog. Mikrotalkum, mit einer Kornfeinheit von maximal 10 µm (vgl. EP-Offenlegungsschrift 249 727). Diese Pigmente und/oder Füllstoffe werden üblicherweise in Mengen von 10 bis 70, vorzugsweise von 30 bis 50 Gew.-%, bezogen auf den Gesamtfestkörpergehalt der Füllerzusammensetzung, eingesetzt.

Weitere Hilfslösemittel, beispielsweise Ether wie Dimethyl(diethyl)glykol, Dimethyl(diethyl)diglykol, Tetrahydrofuran, Ketone, wie Methylethylketon, Aceton, Cyclohexanon, Ester, wie Butylacetat, Ethylglykolacetat, Methylglykolacetat, Methoxypropylacetat, Alkohole, wie Ethanol, Propanol, Butanol, werden, wenn überhaupt, aus Gründen der Umweltfreundlichkeit nur in möglichst geringer Menge verwendet, die in der Regel 10, vorzugsweise 1 bis 5 Gew.-%, bezogen auf Wasser (als dem hauptsächlichen Verdünnungsmittel) nicht überschreitet. Die Menge an Wasser in der wäßrigen Füllerzusammensetzung liegt zumeist bei 15 bis 80 Gew.-%, vorzugsweise 30 bis 60 Gew.-%, bezogen auf die gesamte Füllerzusammensetzung.

Die Herstellung der wäßrigen Füllerzusammensetzung erfolgt nach den üblichen Methoden der Lackherstellung, wie beispielsweise aus der weiter unten angegebenen Richtrezeptur ersichtlich.

Der Auftrag der wäßrigen Füllerzusammensetzungen, die mit Wasser unendlich verdünnbar sind und deren Gesamtfestkörpergehalt (125 °C/2 Std.) im allgemeinen 35 bis 75, vorzugsweise 40 bis 60 Gew.-% beträgt, geschieht in bekannter Weise, beispielsweise durch Spritzen nach dem Druckluftverfahren oder mittels luftloser oder elektrostatischer Spritzverfahren. Zur Härtung der aufgebrachten Füllerschichten werden im allgemeinen Temperaturen von 120 bis 200 °C, vorzugsweise 150 bis 170 °C, angewendet. Die Härtungsdauer liegt im allgemeinen bei 15 bis 30 Minuten, vorzugsweise 18 bis 20 Minuten.

Die so erhaltenen vernetzten Füllerbeschichtungen zeichnen sich insbesondere durch verbesserte Steinschlagfestigkeit bei tieferen Temperaturen (0 ° bis -30 °C) sowie durch gute Zwischenschichthaftung aus. Außerdem besitzen sie eine gute Reißdehnung sowie eine ausgezeichnete Schlagzähigkeit. Die Beständigkeit gegen Luftfeuchtigkeit und Lösungsmittel ist ebenfalls sehr gut.

**Richtrezeptur zur Füllerformulierung**

65,0 Teile Bindemittel aus Beispiel 1-3 wurden mit 5,4 Teilen eines handelsüblichen Melamin-Formaldehyd-Kondensats, 13,5 Teilen Titandioxid, 11,4 Teilen Bariumsulfat (Blanc fix micro), 0,3 Teilen von 25 %iger wäßriger Dimethylethylethanolaminlösung, 2,0 Teilen Talkum, 0,1 Teilen Ruß, 1,5 Teilen deionisiertem Wasser sowie 0,8 Teilen der üblichen Lackhilfsmittel in einer Perlmühle dispergiert (20 min, 600 U/min).

Die Applikation der Füllerzusammensetzung erfolgt mittels Druckblattpistole auf ein mit einer kathodisch abgeschiedenen Elektrotauchgrundierung beschichtetes (ca. 30 µm), zinkphosphatiertes Stahlblech. Die Härtung des Füllers wurde im Umluftofen 10 min bei 80 °C, anschließend 20 min bei 160 °C (Trockenfilmstärke 35 + 2 µm) durchgeführt. Auf die Füllerschicht wurde ein handelsüblicher Alkyd-Melamin-Automobillack aufgebracht und 30 min bei 130 °C eingebrannt (Trockenfilmstärke ca. 30 + 5 µm).

Die Prüfergebnisse sind in der nachfolgenden Tabelle 2 zusammengefaßt. Die Beständigkeitseigenschaften der Filme (Lösungsmittel-, Wasserfestigkeit) entsprechen den Praxisanforderungen.

Tabelle 2

| Dispersion nach Beispiel | 1 | 2 | 3 | 4 | 5 | 6 |
|---|---|---|---|---|---|---|
| Decklackstand | 2 | 2 | 2 | 2 | 1-2 | 1-2 |
| Decklackhaftung | | | | | | |
| + 20 °C | 2 | 2-3 | 2 | 2-3 | 2-3 | 3-4 |
| - 20 °C | 2 | 2-3 | 2 | 2-3 | | |
| Durchschläge | | | | | | |
| + 20 °C | 1 | 2 | 1-2 | 1-2 | 1-2 | 3 |
| - 20 °C | 1 | 2 | 1 | 2 | | |
| Gitterschnitt (nach DIN 53151) | Gt 0 | Gt 0 | Gt 0 | Gt 0 | Gt 0 | Gt 0 |
| Erichsentiefung (nach DIN 53156) | 9,0 | 7,9 | 8,2 | 8,0 | 9,0 | 7,5 |

**Decklackstand**

Glanz und Oberfläche des Decklacks auf den verschiedenen Füllermaterialien wurden subjektiv nach einer Notenskala bewertet (1 = sehr gut, 5 = sehr schlecht).

**Steinschlagfestigkeit**

Wurde mittels Steinschlag-Prüfgerät nach VDA (Fa. Erichsen, Modell 508) geprüft. Für die vorliegende Prüfung wurde jeweils 1 kg Stahlschrot (kantig, 4 - 5 mm), beschleunigt durch Druckluft (2 bar), auf die Prüfbleche geschossen. Bewertet wurden, anhand von Musterblechen, die Decklackhaftung (0 = keine Abplatzungen vom Füller, 10 = vollständige Enthaftung) und die Durchschläge bis auf das Blech (0 = kein Durchschlag, 10 = sehr viele Durchschläge).

## Patentansprüche

1. Wäßrige Füllerzusammensetzung, enthaltend ein Polyesterharz, welches aus den Edukten (a), (b), (c), (d) und (e) oder deren esterbildenden Derivaten aufgebaut ist, wobei die Summe der Stoffmengen der Reaktanden 100 % ist und das Verhältnis der Stoffmenge der Hydroxylgruppen zur Stoffmenge der Carboxylgruppen in den Reaktanden zwischen 0,5 und 2,0 liegt, wobei
   (a) mindestens eine Dicarbonsäure ist, ausgewählt aus den aliphatischen, aromatischen oder cycloaliphatischen Dicarbonsäuren, die frei von Sulfonat-, Phosphonat-, Sulfonsäure- und Phosphonsäuregruppen sind,
   (b) 0 bis 15 mol% mindestens eines difunktionellen Sulfo- oder Phosphonomonomers ist, dessen funktionelle Gruppen Carboxyl- und/oder Hydroxylgruppen sind, mit mindestens einer Sulfonat- oder Phosphonatgruppe, ausgewählt aus den Hydroxy- oder Carboxyarylsulfon- und -phosphonsäuren und deren Salzen,
   (c) aliphatische, aromatische oder cycloaliphatische Glykole mit 2 $-C(R^2)_2OH$-Gruppen sind,
   (d) bis zu 40 mol% einer Verbindung ist, die 3 bis 6 Hydroxylgruppen und/oder Carboxylgruppen enthält und
   (e) bis 20 mol% einer monofunktionellen Carbonsäure ist, ausgewählt aus Caprinsäure, Laurinsäure, Stearinsäure, Palmitinsäure, Isovalerinsäure und Isooctansäure,
   wobei die Reste R in (c) unabhängig voneinander Wasserstoff, $C_1$-$C_4$-Alkyl oder $C_6$-$C_{10}$-Aryl sein können, die Stoffmengen von freien Hydroxylgruppen zwischen 30 und 350 mmol/100 g, bevorzugt zwischen 100 und 250 mmol/100 g, liegen und die Stoffmengen von freien neutralisierten und neutralisierbaren Säuregruppen, insbesondere Sulfon-, Phosphon-, Carbonsäuregruppen, zwischen 5 und 350 mmol/100 g, vorzugsweise zwischen 9 und 120 mmol/100 g, liegt.

2. Wäßrige Füllerzusammensetzung nach Anspruch 1, enthaltend ein Polyesterharz, das aus
   (a) Phthal-, Isophthal- und Terephthalsäure, Phthalsäureanhydrid, Adipin-, Sebacin-, Azelainsäure, 1,3-Cyclohexandicarbonsäure oder Glutarsäure sowie deren Estern,
   (b) Sulfoisophthalsäure, Sulfoterephthalsäure, Sulfophthalsäure, Sulfosalicylsäure, deren Ester oder deren Salzen,
   (c) Ethylenglykol, 1,2- Propandiol, 1,3-Butandiol, 1,6-Hexandiol oder Perhydrobisphenol A,
   (d) Trimethylolpropan, Trimethylolethan, Glycerin, Ditrimethylolpropan, Pentaerythrit, Dipentaerythrit, Dimethylolpropionsäure oder Trimellitsäureanhydrid hergestellt wird.

3. Wäßrige Füllerzusammensetzung nach Anspruch 1, enthaltend ein Polyesterharz, in dem der Anteil der Komponente (b) 1 bis 6 mol% und der Anteil der Komponente (d) 8 bis 20 mol% beträgt.

## Claims

1. An aqueous filler composition comprising a polyester resin, which is built up of the educts (a), (b), (c), (d) and (e) or their ester-forming derivatives, with the sum of the amounts of substances of the reactants being 100 %, and the ratio of the amount of substance of hydroxyl groups to that of carboxyl groups being between 0.5 and 2.0, where
   (a) is at least one dicarboxylic acid selected from the aliphatic, aromatic or cycloaliphatic dicarboxylic acids which are free of sulfonate groups, phosphonate groups, sulfonic acid groups and phosphonic acid groups,
   (b) is 0 to 15 mol % of at least one difunctional sulfo or phosphono monomer, the fuctional groups of which are carboxyl and/or hydroxyl groups, having at least one sulfonate or phosphonate group selected from hydroxy- or carboxyarylsulfonic acids and -phosphonic acids and their salts,
   (c) is an aliphatic, aromatic or cycloaliphatic glycole containing two $-C(R^2)_2OH$ groups,
   (d) is up to 40 mol-% of a compound containing 3 to 6 hydroxyl and/or carboxyl groups,
   (e) is up to 20 mol-% of a monofuctional carboxylic acid, selected from capric acid, lauric acid, stearic acid, palmitic acid, isovalerianic acid, and isooctanic acid,
   it being possible for the radicals R in (c), independently of one another, to be hydrogen, $C_1$-$C_4$ alkyl or $C_6$-$D_{10}$ aryl, the amounts of free hydroxyl groups being between 30 and 350 mmol/100 g, preferably between 100 and 250 mmol/100g, and the amounts of free neutralized and neutralizable acid groups, in particular sulfonic acid groups, phosphonic acid groups, carboxylic acid groups, being between 5 and 350 mmol/100 g, preferably between 9 and 120 mmol/100 g.

2. The aqueous filler composition as claimed in claim 1, comprising a polyester resin which is prepared from

   a) phthalic acid, isophthalic acid and terephthalic acid, phthalic acid anhydride, adipic acid, sebacic acid, azelaic acid, 1,3-cyclohexanedicarboxylic acid or glutaric acid and their esters,

   (b) sulfoisophthalic acid, sulfoterephthalic acid, sulfophthalic acid, sulfosalicylic acid, and their esters or their salts,

   (c) ethylene glycol, 1,2-propanediol, 1,3-butanediol, 1,6-hexanediol or perhydro-bisphenole A,

   (d) trimethylol propane, trimethylol ethane, glycerol, ditrimethylol propane, pentaerythritol, dipentaerythritol, dimethylol propionic acid or trimellitic acid anhydride.

3. The aqueous filler composition as claimed in claim 1, comprising a polyester resin which is built up from 1 to 6 mol-% of component (b) and 8 to 20 mol-% of component (d).

**Revendications**

1. Composition aqueuse d'enduit contenant une résine de polyester, constituée des constituants (a), (b), (c), (d) et (e) ou de leurs dérivés estérifiables, la somme des quantités des réactifs étant de 100 %, le rapport entre la quantité des groupes hydroxyle et la quantité des groupes carboxyle dans les réactifs étant de 0,5 à 2,0, où

   (a) est au moins un acide dicarboxylique choisi parmi les acides dicarboxyliques aliphatiques, aromatiques ou cycloaliphatiques, qui sont exempts de groupes sulfonates, phosphonates, acide sulfonique et acide phosphonique,

   (b) représente de 0 à 15 % en moles d'au moins un monomère sulfoné ou phosphoné difonctionnel, dont les groupes fonctionnels sont des groupes carboxyle et/ou hydroxyle, avec au moins un groupe sulfonate ou phosphonate, choisis parmi les acides hydroxy- ou carboxy-arylsulfoniques et -phosphoniques et leurs sels,

   (c) représente des glycols aliphatiques, aromatiques ou cycloaliphatiques comportant deux groupes $-C(R^2)_2OH$,

   (d) représente jusqu'à 40 % en moles d'un composé contenant de 3 à 6 groupes hydroxyle et/ou carboxyle, et

   (e) représente jusqu'à 20 % en moles d'un acide carboxylique monofonctionnel, choisi parmi l'acide caprique, l'acide laurique, l'acide stéarique, l'acide palmitique, l'acide isovalérique et l'acide isooctanoïque,

   les radicaux R de (c) pouvant, indépendamment l'un de l'autre, être chacun un hydrogène ou un radical alkyle en $C_1$-$C_4$ ou aryle en $C_6$-$C_{10}$, la quantité des groupes hydroxyle libres comprise entre 30 et 350 mmoles/100 g, de préférence entre 100 et 250 mmoles/100 g, et la quantité des groupes acides libres, neutralisés et neutralisables, en particulier des groupes acide sulfonique, phosphonique, carboxylique, est comprise entre 5 et 350 mmoles/100 g et de préférence entre 9 et 120 mmoles/100 g.

2. Composition aqueuse d'enduit selon la revendication 1, contenant une résine de polyester préparée à partir

   (a) d'acide phtalique, isophtalique et téréphtalique, d'anhydride phtalique, d'acide adipique, sébacique, azélaïque, d'acide 1,3-cyclohexanedicarboxylique ou d'acide glutarique, ainsi que de leurs esters,

   (b) d'acide sulfoisophtalique, d'acide sulfotéréphtalique, d'acide sulfophtalique, d'acide sulfosalicylique, de leurs esters ou de leurs sels,

   (c) d'éthylèneglycol, de 1,2-propanediol, de 1,3-butanediol, de 1,6-hexanediol ou de perhydrobisphénol A,

   (d) de triméthylolpropane, de triméthyloléthane, de glycérol, de ditriméthylolpropane, de pentaérythritol de dipentaérythritol, d'acide diméthylolpropionique ou d'anhydride trimellitique.

3. Composition aqueuse d'enduit selon la revendication 1, contenant une résine de polyester dans laquelle la quantité du constituant (b) est de 1 à 6 % en moles et la quantité du constituant (d) est de 8 à 20 % en moles.